# EUROPEAN PATENT APPLICATION

(11) **EP 0 823 798 A1**
(43) Date of publication of application: **11.02.1998**
(21) Application number: 97401903.6
(22) Date of filing: 08.08.1997
(51) Int. Cl.: H04H 1/00, H04L 12/18, H04N 7/173, H04N 7/52, H04N 7/58, H04N 7/20

(54) **Receiver in a cyclic packet data transmission system**

(30) Priority: 09.08.1996 FR 9610067
(71) Applicant: THOMSON Multimedia, 92648 Boulogne Cédex (FR)
(72) Inventor: Deniau, Eric, 92648 Boulogne Cedex (FR); Straub, Gilles, 92648 Boulogne Cedex (FR)
(74) Representative: Ruellan-Lemonnier, Brigitte

(57) **Abstract**

The invention relates to a receiver in a cyclic packet data transmission system, the said system furthermore including at least one transmitter.

According to the invention, the receiver includes:
- means (5) for demultiplexing and filtering the said data packets,
- means (6) for storing a database from data selected from data structures of the packets extracted by filtering,
- means (19, 23) for detecting updating of data structures including data appearing in the database,
- means (19, 23) for comparing, in case of detection of updating of a data structure, the data stored in the database and the corresponding data of the said updated data structure and, only in the case in which there is a difference, for notifying a client application of this difference.

The invention applies particularly within the framework of the transmission of electronic programe guides in DVB ("Digital Video Broadcast") or DSS ("Digital Satellite System") type digital television systems.

## Description

The invention relates to a receiver in a cyclic packet data transmission system, the said system furthermore including at least one transmitter. The invention applies in particular in the field of the transmission of digital television and service information, for example of the electronic programe guide type.

In the framework of digital television transmission, for example according to the DVB (Digital Video Broadcast) standard, there is provision to transmit a certain number of data items intended in particular to inform the user with regard to the programes transmitted or to allow a degree of interactivity. The multiplexed data stream thus forms a constantly updated database retransmitted cyclically, with data-dependant retransmission periods related to the type of data and to the allotted passband.

It becomes necessary to develop tools to exploit this database efficiently, whilst taking into account the possibilities and limitations of the receivers. These are in fact limited in terms of memory and computational power.

The data structures (descriptors, tables, ...) used in the transmission include version numbers which enable the receiver to determine whether a structure detected in the data stream does or does not include a new item of information.

A data update in the receiver may involve considerable processing in respect of the relevant applications, especially as regards the refreshing of the display.

It is therefore expedient to propose a receiver which can optimize its resources.

The subject of the invention is a receiver in a cyclic packet data transmission system, the said system furthermore including at least one transmitter, characterized in that the said receiver includes:
- means for demultiplexing and filtering the said data packets,
- means for storing a database from data selected from data structures of the packets extracted by filtering,
- means for detecting an update of data structures including data appearing in the database,
- means for comparing, in case of detection of an update of a data structure, the data stored in the database and the corresponding data of the said updated data structure and, only in the case in which there is a difference, for notifying a client application of this difference.

Thus, it has been noted that the version number of a data structure is modified even if only one data value in the structure has changed. If the updated data are not data used by an application or stated otherwise, if the data stored in the database of the receiver have not been modified, there is then no benefit in notifying the application or the applications concerned of any change. In this way redundant processing of data whose values have not in fact altered is avoided.

According to a variant embodiment, the demultiplexing and filtering means are programmed following requests from the client application(s).

According to a particular embodiment, the client application(s) comprise an electronic programe guide type application.

According to a particular embodiment, an application determines a priority level for each request, the resources of the demultiplexing and filtering means and means of storage being reserved in the first instance for the requests having the highest priority level.

By giving certain requests priority relative to other requests from the point of view of the internal processing and of the allocation of resources it becomes possible to hierarchize the data according to their importance, in particular depending on the time at which these data will be required.

According to a particular embodiment, there is implemented an advance priority level and a non-advance priority level, the non-advance priority level being higher than the advance priority level.

According to a particular embodiment, the non-advance priority level is allocated to requests concerning data whose use by an application is certain, whereas the advance priority level is allocated to requests concerning data whose use by an application is probable, but not certain.

According to a particular embodiment, the non-advance priority level is allocated to requests concerning data which are to be displayed as fast as possible.

According to a particular embodiment, an application determines whether a request is of the permanent or one-off type, a request of the permanent type being maintained at the level of the programing of the demultiplexing and filtering means until a contrary instruction from the application from which the permanent request originates, whereas a request of the one-off type is erased at the level of the programing of the demultiplexing and filtering means after obtaining the corresponding data packet(s).

According to a particular embodiment, the data stored in the storage means are data corresponding to permanent requests.

Other characteristics and advantages of the invention will emerge through the description of a particular non-limiting example embodiment illustrated by the appended figures forming an integral part of the present description:
- Figure 1 is a block diagram of a television receiver implementing the present example embodiment,
- Figures 2a to 2c are timecharts of the exchanges which have taken place between an application, the data management module and the data source, in accordance with the present example,
- Figure 3a, respectively 3b is a state chart illustrating the operation of a one-off, respectively permanent request,
- Figure 4 is a diagram of a screen of an application, namely an electronic programe guide according to the present example embodiment,
- Figure 5 is a chart of the database maintained by the management module.

It will be observed that for fuller information regarding the format and content of the service data, MPEG and DVB tables and sections, reference will be made in particular to the following three documents:
(a) ETS 300 468 - Specification for Service Information (SI) in Digital Video Broadcast (DVB) systems - January 23, 1996,
(b) ISO/IEC 13818-1 (1994) Generic Coding of Moving Pictures and Associated Audio - Recommendation H.220, also called "MPEG II Systems", and
(c) ETR 211 - Digital Broadcasting systems for television: Implementation guidelines for the use of MPEG-2 systems; Guidelines on implementation and usage of service information.

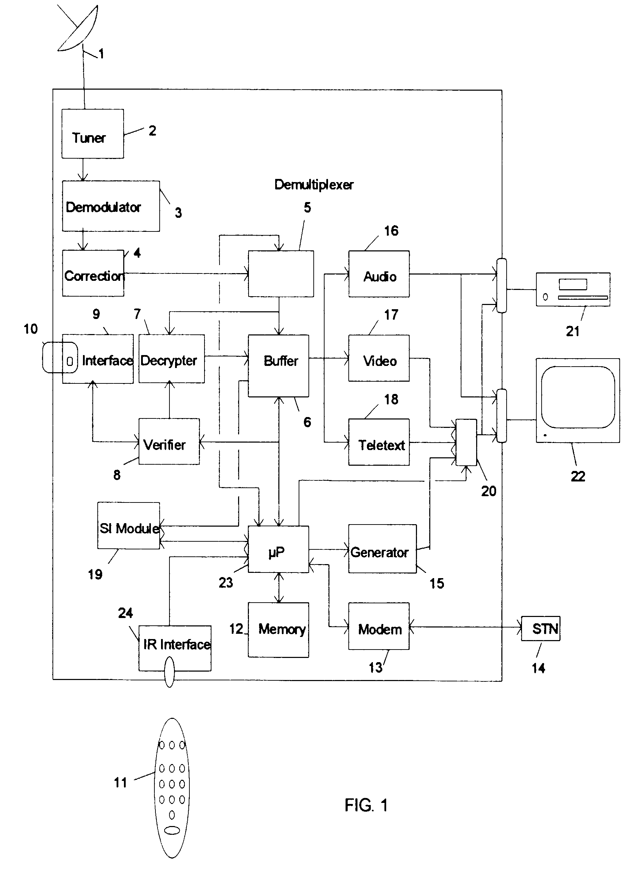

Figure 1 is a block diagram of a DVB (Digital Video Broadcasting) type digital television integrated decoder/receiver.

It is obvious that the invention is not limited to this physical environment, but may easily be adapted to another type of service data transmission.

The decoder of Figure 1 is linked to an antenna 1, itself linked to a tuner 2 of the decoder. The signal provided by the tuner is demodulated by a demodulator 3. The demodulated data are corrected by a corrector circuit 4 and transmitted to a demultiplexer 5.

The latter is, for example, a demultiplexer similar to that described in French patent application 95 15767 filed on 29 December 1995 in the name of THOMSON multimedia. The demultiplexer 5 includes a certain number of filters programmed by a microprocessor 23 as a function of the various applications supported by the decoder. For the clarity of the diagram, only the most important connections of the microprocessor 23 are illustrated.

The audio or video packets or sections filtered by the demultiplexer are stored in predefined areas in a buffer memory 6 for the attention of these applications. If necessary, the information is firstly decrypted by a decrypter circuit 7 depending on the user's entitlements, before being stored in this buffer memory 6.

According to the present example, the applications are five in number: an audio decoder 16, a video decoder 17, a Teletext decoder 18, an access control assembly (comprising the decrypter 7, a verifier microcontroller 8 and an interface for a microprocessor card 9 linked in normal operating mode to a microprocessor card 10), as well as a service data management module.

The decoder also includes an infrared interface for a remote control 24, the said interface being likewise linked to the microprocessor 23. The latter is connected to a memory 12 which includes the operating system as well as resident or downloaded programes for running the applications.

A modem 13 linked to the switched telephone network 14 is also controlled by the microprocessor.

A character generator 15 allows the generation of command or graphics menus relating to the parameters of the decoder or to a particular application. The video signal generated by this character generator is multiplexed with one of the video signals coming from the video decoder 17 or from the Teletext decoder 18 towards a first TV peripheral socket (SCART socket) linked to a television 22 or a second TV peripheral socket linked to a video recorder 21. The multiplexing circuit 20 is managed by the microprocessor 23.

The invention relates more particularly to the operation of the service data management module. In the present case, this module is physically speaking a programe managed by the microprocessor, although conceptually it concerns an application which processes data packets, in the same manner as an audio or video decoder, and for which dedicated circuits are used.

The module is an interface between the service data (MPEG and DVB tables and sections) and client applications (programe guide, telepurchasing, interactive games, etc.). It manages the requests from client applications and maintains an internal database on the strength of the service data received.

According to the present example embodiment, the client application is a programe guide also managed by the microprocessor.

The management module makes a certain number of functions available to the client applications, these functions being intended to formulate the requests relating to the information needed by the applications.

The request functions operate asynchronously. The response to a request, if response there be, is notified to an application by the management module when this response is available. This requires the implementation of a request function identification mechanism. For this purpose, an identifier is chosen by the application for each request issued and is transmitted together with this request. This identifier is bound up with the notification of response by the management module.

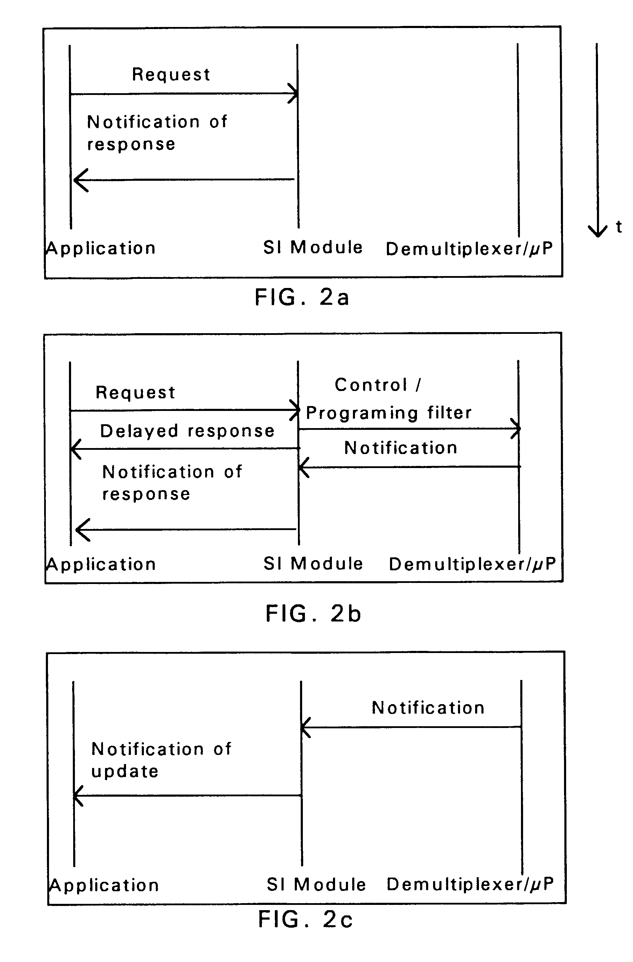

Figures 2a to 2c illustrate the three cases of exchanges, following a request, between the client application, the service data management module and the source of these data, namely the demultiplexer/buffer memory/microprocessor assembly.

Figure 2a relates to the case in which the internal database ("cache memory") includes the information requested by the client application. The request from the latter is followed by a notification of availability of this information. The information being in this case present in the database, the notification of response is quasi-immediate. In this case, no data item has been transferred to or from the source.

Figure 2b illustrates the case in which the information item requested does not appear in the internal database. In this case, the request from the client application is also followed by a notification by the management module to the application intended to inform of the temporary unavailability of the information item, and then by a command addressed by the management module to the data source. When the section or sections corresponding to the sought-after information item have been found within the stream of demultiplexed data stored in the buffer memory, the source notifies the module SI that these sections are available. After reading and reformatting the data of the sections, the management module in turn notifies the client application that the sought-after information item is available. The module writes the sought-after information item (which might be only a part of the data of the section) to a buffer memory allotted during its initial request by the client application. This notification therefore arrives in this case less quickly than in case 2a.

According to a variant, the management module does not undertake notification of the unavailability of the information item.

Figure 2c illustrates the case in which the initial request such as that of Figure 2a specifies that the changes in the sought-after information item are to be signalled. In this case, the filters of the source which made it possible to extract the data packet containing this information item from the data stream are held at the previous values instead of being deactivated. This type of request, a so-called permanent request, will be described in greater detail below.

According to the present example embodiment, there are four types of request:
(a) Unique request
   When such a request is addressed by the application to the management module, the latter makes its resources (filter and memory) available only up to the time of transfer of the requested data. The resources are immediately freed.
(b) Advance one-off request
   This request possesses the characteristics of the one-off request, but possesses a lesser priority. The management module maintains two FIFO type memories, one for the advance requests and the other for the non-advance requests. The waiting advance requests are always processed after the non-advance requests.
(c) Permanent request
   The resources of the management module are maintained, even after demultiplexing and transfer of the data requested. Whenever these data undergo a change, a notification is transmitted to the application. The management module therefore performs systematic monitoring, and does so until the application sends a command to interrupt this monitoring.
(d) Advance permanent request
   This request is similar to the permanent request, but with a lower priority level.

The priorities attached to the requests do not of course in any way prejudge the order of actual reception of the data relating to these requests. This order depends also on factors such as the periodicity of each data item and the instant at which the request is formulated with respect to this period.

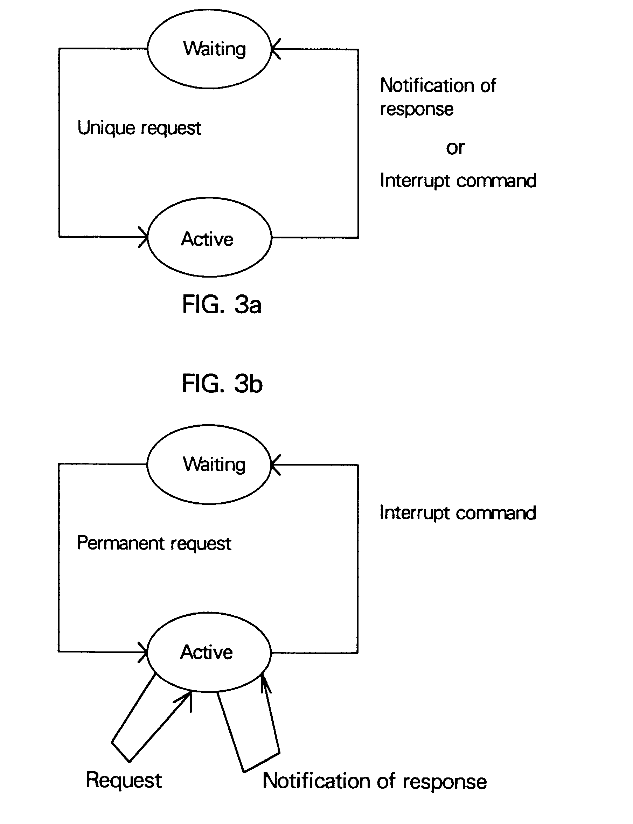

Figure 3a is a state diagram of a one-off request, whereas Figure 3b is a state diagram of a permanent request.

Each time an application formulates a request, a request type must be associated therewith.

In the case of a permanent request, the data retrieved from the stream are moreover stored in the internal database of the management module. This is not the case for the data extracted following a one-off request, for which no copy of the data is retained. When a new version of a table or of a descriptor containing data relating to a permanent request is detected (i.e. when the version_id parameter of the table changes), the appropriate data of this table or of this descriptor are compared with the data in the database. A notification of update is transmitted only if at least one of these data items has been modified. The version identifier of the table or of the descriptor is in fact modified regardless of the modification involved in the table, even if it relates only to data not requested by an application. This mechanism avoids transferring redundant data between the application and the management module.

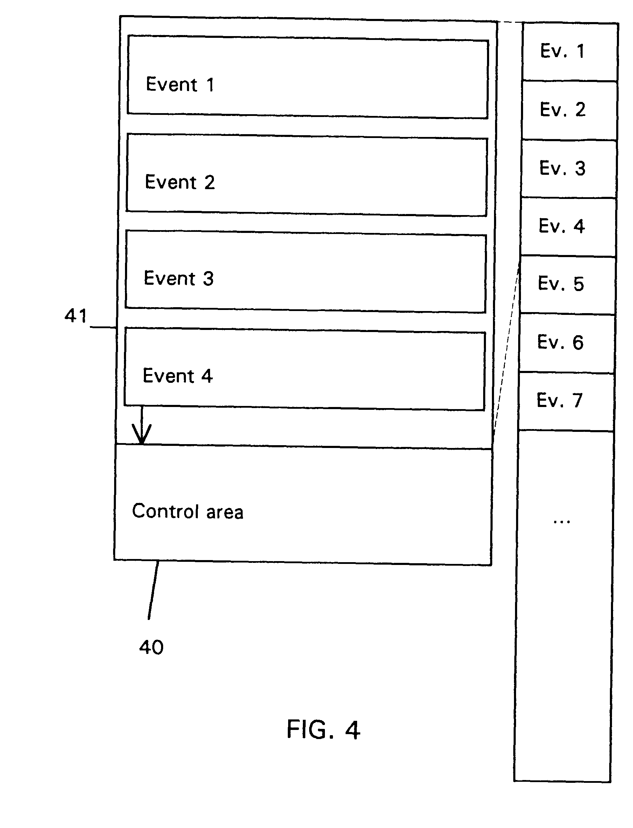

The choice of the type of request is left to the application. By way of an example of a decision criterion of an application as regards the type of request, Figure 4 is a diagram of a programe guide screen. The screen includes two parts: a lower part 40 giving access to command functions through a remote control, and an upper part 41 which includes a list of events which are selected using the said commands. For each of the events, the programe guide displays the title, the name of the corresponding service and the start and finish time.

The upper part 40 can display only a part of the list of events. To access the other events the user uses scrolling arrows of the remote control.

When the programe guide application addresses the requests relating to the information for the events of the list to the management module, the request concerning the events displayed first will be of the non-advance type, that is to say will have priority. This is in fact information which absolutely must be displayed. The request relating to the other events of the list will be of the advance type, and processed by the management module after the non-advance requests. It is not in fact definite that the application will need the corresponding information, since it is not certain that the user will actually scroll the events if the particulars which he is looking for are among the events displayed initially. For the purpose of speeding up the display of these data in the case in which they are requested, they are however preloaded. When the data in response to an advance request have been demultiplexed, the management module notifies the application which launched this request of this fact. The transfer of data to a buffer made available by the application does not however take place so long as the application does not request this transfer.

One of the roles of the service data management module is to programe the filters of the demultiplexer. To fulfil this function and allow fast access to the sought-after data, it maintains in accordance with the present example embodiment an image of the physical structure of the network or networks to which it has access.

Documents a and b define ten tables giving information about the configuration of the network or networks, bundles, services and events transmitted. The tables are identified by particular values of PID (Packet Identification Data) and of table identifiers (table_id), the values of which are defined by the said documents. Each table contains a version identifier making it possible to determine whether from one transmission of the table to another, the content of this table has changed.

A version identifier can also be used at the level of a descriptor or group of descriptors, and can be so used in parallel with the descriptor of the table.

The table which interests us here is the so-called NIT table (standing for Network Information Table). The NIT table includes information about a given transmission network, in particular the list of services available per transmission channel (Transport Stream).

The data management module constructs an internal indexing of the networks, channels and services available. When the decoder is switched on or when the NIT table is updated, a logic key is allocated to each of the services available. This key is the index of this service in the database maintained by the module.

In a DVB system, a service can be located uniquely by the route comprising the following variables:
- network_id (identifier of the network),
- (transport_stream_id; original_network_id) pair
- service_id (identifier of the service proper).

The three variables are natural integers coded on 16 bits.

Three types of lists are created: one list for the networks, one list of channels for each network and one list of services for each channel.

An element in the list of networks is created each time a NIT table which includes a new network is demultiplexed. To do this, the transport packets whose PID is equal to 0x0010 are filtered. These packets actually contain the NIT tables, additionally identified by a variable table_id. A 4-bit code is associated with each network, in the order of the demultiplexing of the corresponding tables. The code is the index of the address pointer of the structure which includes the information relating to this network.

The NIT table includes the list of channels for this network, as well as the list of services available for each channel.

For each network of the list of networks, a list of channels is created. Each element of a list of channels is indexed with the aid of 5 bits. The list contains the address pointers of the structures which include the data specific to each channel. The logic key for identifying a channel in the database is composed of the 4 index bits of the network, followed by the 5 bits of the index of the channel of this network.

For each channel, a list of services is created, containing the identifiers of the services described in the NIT table. Each service in a list is indexed on 7 bits. The logic key of a service in the database therefore includes 16 bits in all: 4 network index bits, 5 channel bits and 7 service bits.

An event of a service will be identified with the aid of the 16 bits denoting this event (variable event_id of the table), to which will be appended the 16 bits of the logic key of the associated service.

The structure of the database (other than events) is organized according to the following structures:

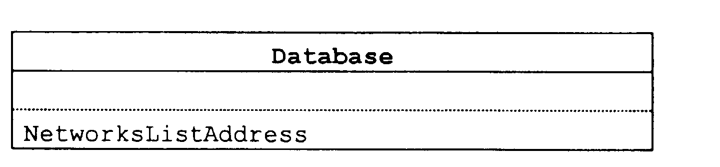

| **NetworksList** | |
|---|---|
| 0 | NetworkAddress |
| 1 | NetworkAddress |
| 2 | NetworkAddress |
| 3 | NetworkAddress |
| 4 | NetworkAddress |
| 5 | NetworkAddress |
| 6 | NetworkAddress |
| 7 | NetworkAddress |
| | NetworksArrayNextAddress |

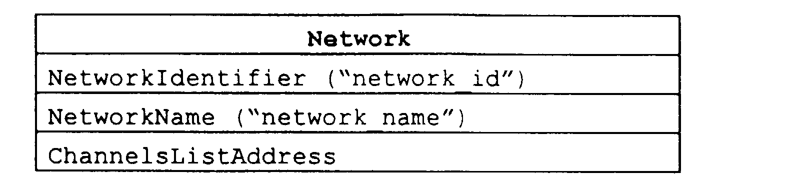

| **ChannelsList** | |
|---|---|
| 0 | ChannelAddress |
| 1 | ChannelAddress |
| 2 | ChannelAddress |
| 3 | ChannelAddress |
| 4 | ChannelAddress |
| 5 | ChannelAddress |
| 6 | ChannelAddress |
| 7 | ChannelAddress |
| | ChannelsArrayNextAddress |

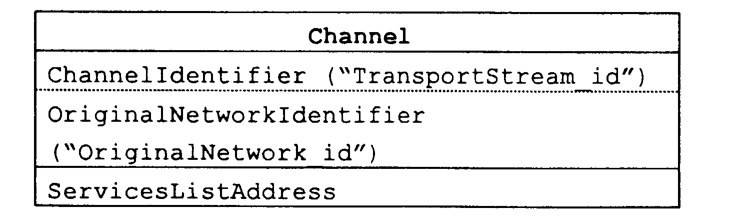

| **ServicesList** | |
|---|---|
| 0 | ServiceAddress |
| 1 | ServiceAddress |
| 2 | ServiceAddress |
| 3 | ServiceAddress |
| 4 | ServiceAddress |
| 5 | ServiceAddress |
| 6 | ServiceAddress |
| 7 | ServiceAddress |
| | ServicesArrayNextAddress |

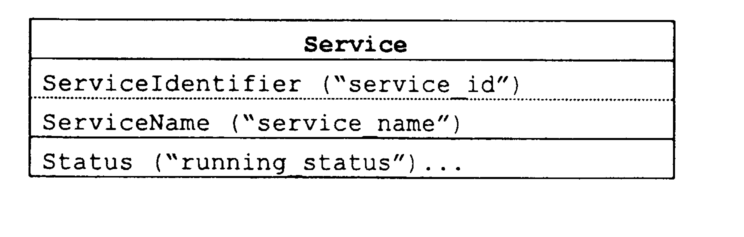

The variables whose name contains the term "Address" are pointers to memory areas corresponding to the start of a data structure.

The other variables correspond to information extracted from the data stream. To facilitate understanding, these variables are followed in brackets and between quotation marks by the name used in document (a).

It will be noted that the lists of networks, of channels and of services are each organized as arrays, each array being composed on the one hand of eight pointers to data structures of the network, channel or service type, and on the other hand of a pointer to a possible array containing the rest of the list. The latter pointer is null when there is no other array, i.e. when an array contains the last elements of a list.

The Database array contains a pointer to the array containing the first part of the list of networks.

The NetworksList array includes the pointers to the first eight networks. According to the present example embodiment, there are at most two NetworksList arrays, containing the complete list of networks.

The Network array includes the information relating to a given network, as well as a pointer to the list of channels associated with this network.

The structure of the other arrays is similar to what has just been described. It is moreover easy to extend it to the events and to other types of data.

According to a variant embodiment, the requests relating to the data concerning the structure of the network, of the channels and of the services are requests of permanent type, this for the purpose of keeping constantly up to date the image of the network in the database.

In their exchanges with the management module, the applications use only the logic keys. These are translated by the module into a memory address corresponding to the site at which the information is stored.

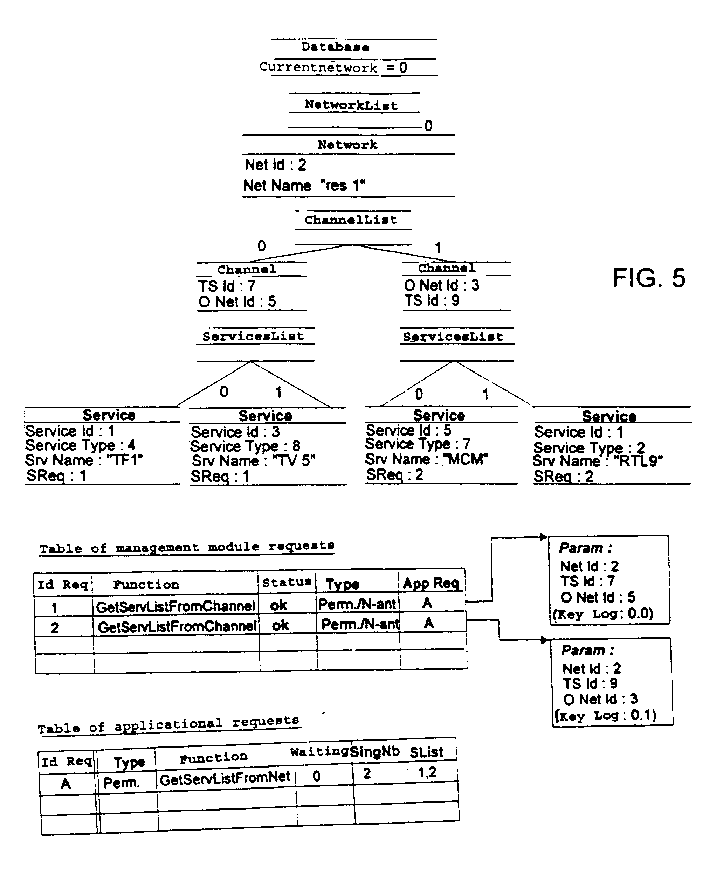

Figure 5 is a diagram of the database of the management module in the case of the existence of a network, including two channels, each channel itself including two services.

The table of applicational requests gives the list of requests currently being formulated by the applications. According to the present example, the only request which is current is a request of permanent type intended to retrieve the list of services present on a network.

The table of requests of the management module includes the primitive requests responding to the applicational requests. A primitive request is in the present context a request which can be translated into a single filter at demultiplexer level. In the present case, given that two channels exist in the network, two primitive requests are necessary to translate the applicational request: one primary request per list of services or else per channel. It is the management module which separates the applicational requests into primitive requests.

In the figure, the filters corresponding to each primitive request are found on the left of the table of requests of the management module.

It is assumed that at the instant illustrated by Figure 5, the service lists have been acquired a first time. Given the permanent nature of the applicational request, the corresponding filters, as well as the content of the database relating to this request are maintained.

The digits identifying the branches linking a list and an element in this list correspond to the index (logic key) of this element in the list.

The application now seeks to obtain the list of events which are current in the network. There is one event which is current per service; this makes it necessary to filter the corresponding "EIT Present/Following" table ("Event Information Table").

The request issued by the application includes, for a given service, the following parameters:
- a request identifier,
- the type of the request,
- the logic key of the service concerned,
- a set of flags indicating which data of the event descriptors will be stored in the base,
- a data structure intended to contain on the one hand the start time of the event, its duration, an item of information regarding access control and the name of the event, and on the other hand an address pointer to the address from which the storage of the data identified by the flags will begin.

According to the present example, it is assumed that the requests relating to the events which are current in the first channel (TS_id=7) are non-advance, whereas the requests relating to the events which are current in the second channel (TS_id=9) are advance. This can, for example, be the case when only two events can be displayed at the same time, and when the events of services 1 (Service_id=1) and 3 (Service_id=3) are displayed first on the screen.

To obtain particulars about the events which are current, the application has to launch four distinct requests, which are already primitive requests. It will be assumed in what follows that these requests are not permanent. The data concerning the events will consequently not be stored in the internal database once they have been transferred to the client application.

The management module reviews the primitive requests and processes the non-advance requests as a priority.

The logic keys transmitted by the application will be respectively:
0.0.0
0.0.1
0.1.0
0.1.1
where the first digit represents the network, the second the (channel, original network) pair and the third the service.

By virtue of the lists maintained by the management module, the actual identifiers can be sent to the demultiplexer, giving priority to the first two requests. The value of the PID of the EIT table (PID=0x0012) as well as the identifier of the EIT_present_following table (table_id=0x4E) are defined by document (a) and are accessible via a look-up table indexed by the request function.

With the aid of this information, one of the filters of the demultiplexer can be programmed.

According to a variant embodiment, in the case of insufficient memory, at least some of the stored data corresponding to the permanent advance requests is erased.

According to a variant embodiment, the type of a request which is current can be changed. A particular example envisaged consists in changing a request of non-advance permanent type into a request of advance permanent type. A specific function for such a change is available for the client application.

According to a variant, the management module itself generates certain requests relating to the structure of the networks (especially the list of networks and the associated lists of channels) and maintains them in a permanent manner.

It should be noted that the invention is not limited merely to the transmission of data by satellite, radio or cable, but can be employed in any system in which data or data packets appear periodically in the data stream. This is the case in particular for data streams which are recorded and read back.

## Claims

1. Receiver in a cyclic packet data transmission system, the said system furthermore including at least one transmitter, characterized in that the said receiver includes:
- means (5) for demultiplexing and filtering the said data packets,
- means (6) for storing a database from data selected from data structures of the packets extracted by filtering,
- means (19, 23) for detecting an update of data structures including data appearing in the database,
- means (19, 23) for comparing, in case of detection of an update of a data structure, the data stored in the database and the corresponding data of the said updated data structure and, only in the case in which there is a difference, for notifying a client application of this difference.

2. Receiver according to Claim 1, characterized in that the demultiplexing and filtering means (5) are programmed following requests from the client application(s).

3. Receiver according to Claim 1 or 2, characterized in that the client application(s) comprise an electronic programe guide type application.

4. Receiver according to Claim 2, characterized in that an application determines a priority level for each request, the resources of the demultiplexing and filtering means (5) and means of storage (6) being reserved in the first instance for the requests having the highest priority level.

5. Receiver according to Claim 4, characterized in that there is implemented an advance priority level and a non-advance priority level, the non-advance priority level being higher than the advance priority level.

6. Receiver according to Claim 5, characterized in that the non-advance priority level is allocated to requests concerning data whose use by an application is certain, whereas the advance priority level is allocated to requests concerning data whose use by an application is probable, but not certain.

7. Receiver according to one of Claims 5 or 6, characterized in that the non-advance priority level is allocated to requests concerning data which are to be displayed as fast as possible.

8. Receiver according to one of Claims 2 to 7, characterized in that an application determines whether a request is of the permanent or one-off type, a request of the permanent type being maintained at the level of the programing of the demultiplexing and filtering means (5) until a contrary instruction from the application from which the permanent request originates, whereas a request of the one-off type is erased at the level of the programing of the demultiplexing and filtering means (5) after obtaining the corresponding data packet(s).

9. Receiver according to Claim 8, characterized in that the data stored in the storage means are data corresponding to permanent requests.
